# EUROPEAN PATENT SPECIFICATION

(11) **EP 0 502 728 B1**
(45) Date of publication and mention of the grant of the patent: **14.08.1996**
(21) Application number: 92301887.3
(22) Date of filing: 05.03.1992
(51) Int. Cl.: C08L 9/06, C08K 3/04, B60C 1/00, C08F 236/10, C08F 4/48

(54) **Pneumatic tires**
Luftreifen
Pneumatiques

(30) Priority: 05.03.1991 JP 38596/91; 05.03.1991 JP 38597/91
(43) Date of publication of application: 09.09.1992
(73) Proprietor: Bridgestone Corporation, Tokyo 104 (JP)
(72) Inventor: Hamada, Tatsuro, Kodaira City, Tokyo (JP); Yamanaka, Eiji, Kodaira City, Tokyo (JP)
(74) Representative: Whalley, Kevin

(56) References cited:
- EP-A- 0 087 736
- EP-A- 0 328 284
- EP-A- 0 476 640
- FR-A- 2 490 651
- GB-A- 2 160 207
- US-A- 4 677 165

## Description

This invention relates to a pneumatic tire having stable and improved running performances (high gripping performance) and excellent wear resistance.

Recently, pneumatic tires have been required to have good running performances. Particularly, good gripping performance is required as an important performance. That is, as the acceleration and braking performances become higher, the tire can be more stably run at a higher speed. Heretofore, in order to obtain high running performances, particularly high gripping performance, it has been required that a road gripping force (gripping property) of a tread portion has a high loss property. For this purpose, it is naturally attempted to conduct an examination for improving the tread portion. There is known a method of improving a tread pattern, wherein grooves formed in the tread pattern are made deeper to easily deform island portions of the tread directly contacting the ground against pressure from the road surface, whereby an ability of changing the pressure from the road surface into heat energy inside the tread portion, i.e. an ability of absorbing the pressure from the road surface to a certain extent, is increased to improve the road gripping property of the tread portion. In this method, however, the deformation of rubber is rather easy, so that the amount of the tread portion worn increases to create a problem that sufficient wear resistance can not be obtained.

Furthermore, the high running performances, particularly high gripping have hitherto been attained by selecting a styrene-butadiene copolymer rubber having a high content of bound styrene as a rubber ingredient, or by selecting a rubber composition having higher contents of softening agent and carbon black, or by selecting carbon black having a small grain size (large specific surface area of nitrogen adsorption N₂SA), or by combining these features. In general, a rubber composition containing styrene-butadiene copolymer rubber having a high bound styrene content provides a high gripping property, but since the glass transition temperature (Tg) is high, the temperature dependency of loss factor (tan δ) becomes conspicuous, and when atmosphere temperature and road surface temperature are high, the running performances are poor and also the wear resistance is poor. On the other hand, in a rubber composition having higher contents of softening agent and carbon black, the strength of rubber lowers and hence there are caused such problems that the appearance of worn tread is degraded and the running performances are considerably lowered.

Thus, the road gripping property and the wear resistance in the tire tread have a so-called conflicting relation even when using conventionally known rubber compositions, so that it is considered that it is very difficult to simultaneously improve these properties.

Under the above circumstance, the present invention aims to provide a pneumatic tire comprising a tread having excellent wear resistance and particularly satisfying the conflicting relation between road gripping property and wear resistance while maintaining proper hardness, modulus and the like at a vulcanized state.

According to the invention, there is provided a pneumatic tire having a tread portion made from a rubber composition comprising 60-250 parts by weight of carbon black having a specific surface area of nitrogen adsorption (N₂SA) of 90-250 m²/g based on 100 parts by weight of a styrene-butadiene copolymer, which is obtained by using an organolithium polyfunctional initiator or an organomonolithium initiator and a polyfunctional monomer and has a weight average molecular weight as polystyrene of not less than 1,000,000, alone or a rubber blend containing not less than 10 parts by weight of the said copolymer, wherein said styrene-butadiene copolymer has a content of bound styrene of 10-55% by weight and a content of vinyl bonds in butadiene units of 20-80% by weight, and wherein said styrene-butadiene copolymer further contains a low molecular weight styrene-butadiene copolymer obtained by using an organolithium initiator and having a weight average molecular weight as polystyrene of 2,000-50,000, in an amount of 20-120 parts by weight per 100 parts by weight of the first-mentioned copolymer.

The styrene-butadiene copolymer has a content of bound styrene of 10-55% by weight and a content of vinyl bonds in butadiene units of 20-80% by weight. The styrene-butadiene copolymer further contains a low molecular weight styrene-butadiene copolymer obtained by using an organolithium initiator and having a weight average molecular weight as polystyrene of 2,000-50,000, preferably 5,000-30,000, in an amount of 20-120 parts by weight per 100 parts by weight of the copolymer.

As mentioned above, in the invention, a very-high molecular weight styrene-butadiene copolymer obtained by using particular initiators with carbon black having a particular specific surface area of nitrogen adsorption is used for the tread portion of the pneumatic tire, whereby the road gripping property is improved and the wear resistance is considerably improved as compared with a rubber composition comprising the usual copolymer and carbon black.

The very-high molecular weight styrene-butadiene copolymer (hereinafter referred to as a copolymer A) used in the invention is characterized by copolymerization with an organolithium polyfunctional initiator, or by polymerization with an organomonolithium initiator and a polyfunctional monomer, while the low molecular weight styrene-butadiene copolymer (hereinafter referred to as a copolymer B) used in the invention is characterized by copolymerization with an organo(mono)lithium initiator. In anion polymerization using the organolithium as an initiator, the molecular weight is increased by reacting a compound containing two or more halogen atoms per active terminal after the completion of the polymerization. Further, when using the organolithium polyfunctional initiator or a combination of organomonolithium initiator and polyfunctional monomer as in the invention, the number of active terminals per one chain of the polymer after the completion of the polymerization increases, so that the molecular weight is further increased by coupling reaction to obtain a very large molecular weight polymer. On the other hand, when the coupling agent is not used, only a polymer having the same molecular weight as in the completion of the polymerization is obtained.

The copolymer A may be obtained by copolymerization using an aliphatic hydrocarbon such as n-hexane or n-heptane, an aromatic hydrocarbon such as toluene or benzene or cyclohexane as a solvent in the presence of the particular organolithium initiator. As the organolithium initiator, use may be made of organolithium polyfunctional initiators such as tetramethylene-1,4-dilithium, hexamethylene-1,6-dilithium, 1,3-dilithiobenzene, 1,4-dilithiobenzene, octamethylene-1,8-dilithium and 1,4-dilithiocyclohexane, or a combination of this initiator with an organomonolithium initiator. Also, the copolymer A may be obtained by a method wherein a polyfunctional monomer such as divinylbenzene or diisopropenylbenzene is added before or during the polymerization in the presence of the organomonolithium initiator such as nbutyllithium or sec-butyllithium. In such a copolymer A, a polar compound such as tertiary amine or ether is preferably added as a randomizing agent for styrene during the polymerization.

The copolymer B may be obtained by polymerization using the same solvent as mentioned above in the presence of an organomonolithium initiator such as nbutyllithium or sec-butyllithium. Furthermore, the same randomizing agent as mentioned above may preferably added during the polymerization.

After the polymerization, the styrene-butadiene copolymer may be coupled with a silane compound having the following general formula:

SiRₚX_{q}

wherein X is a halogen atom selected from chlorine, bromine and iodine, R is a substituent selected from alkyl groups, alkenyl groups, cycloalkyl groups and aryl groups, p is an integer of 0-2, q is an integer of 2-4 and p+q= 4, whereby a higher molecular weight polymer is obtained to provide a more preferable wear resistance. As the silane compound of the above formula, use may be made of tetrachlorosilane, tetrabromosilane, methyl trichlorosilane, butyl trichlorosilane, octyl trichlorosilane, dimethyl dichlorosilane, dimethyl dibromosilane, diethyl dichlorosilane, dibutyl dichlorosilane, dibutyl dibromosilane, dioctyl dichlorosilane, diphenyl dichlorosilane, diallyl dichlorosilane, phenyl trichlorosilane and phenyl tribromosilane.

The copolymer A used in the tread of the pneumatic tire according to the invention is required to have a weight average molecular weight as polystyrene of not less than 1,000,000, preferably not less than 1,200,000. When the weight average molecular weight as polystyrene is less than 1,000,000, the desired wear resistance can not be obtained. Moreover, the molecular weight of the copolymer A according to the invention is preferably higher within a producible range, so that the upper limit is not particularly restricted, but the weight average molecular weight as polystyrene is preferably not more than 5,000,000 having regard to operability and productivity in the production of the copolymer.

On the other hand, the weight average molecular weight of the copolymer B used in the invention is 2,000-50,000, preferably 5,000-30,000. When the weight average molecular weight is less than 2,000, the effect of further improving the wear resistance and the gripping property becomes smaller, while when it exceeds 50,000, the wear resistance is excellent, but the gripping property is degraded. That is, the further improving effect of the wear resistance and gripping property is attained only in a tread rubber composition containing the copolymer B of the above defined weight average molecular weight range.

In the copolymer A, the content of bound styrene is 10-55% by weight, preferably 25-45% by weight. When the bound styrene content is less than 10% by weight, the hystresis loss is small and the gripping property is poor, while when it exceeds 55% by weight, block sequence of styrene is increased to in turn increase the temperature dependency of modulus in a service temperature region, and hence stable running performances are not obtained and also the wear resistance is poor.

Furthermore, the average content of vinyl bonds in butadiene units in the copolymer A according to the invention is 20-80% by weight, preferably 35-70% by weight. When the average content of vinyl bonds is less than 20% by weight, the heat resistance is poor and the gripping property is degraded in a long-period use, while when it exceeds 80% by weight, the properties at breakage are poor and the wear resistance is degraded.

When the copolymer B is used together with the copolymer A in the invention, it is required that the amount of the copolymer B is 20-120 parts by weight based on 100 parts by weight of the copolymer A. It is preferable that the copolymers A and B are blended with each other at solution state in the completion of the polymerization and dried and taken out in a usual manner. When the amount of the copolymer B is less than 20 parts by weight per 100 parts by weight of the copolymer A, the improving effect of the wear resistance and the gripping property is small, while when it exceeds 120 parts by weight, the gripping property becomes high, but the wear resistance is poor and at the same time the processability is considerably degraded and hence it is difficult to build the tire.

According to the invention, 60-250 parts by weight of carbon black having a specific surface area of nitrogen adsorption (N₂SA) of 90-250 m²/g is compounded based on 100 parts by weight of the copolymer A alone or a rubber blend containing not less than 10 parts by weight of the copolymer A. When the specific surface area of nitrogen adsorption (N₂SA) of carbon black is less than 90 m²/g, the gripping property is poor, while when it exceeds 250 m²/g, the heat resistance is poor. Further, when the amount of carbon black is less than 60 parts by weight, the reinforcing effect is insufficient and hence the wear resistance is poor and tan 6 becomes small to provide no good gripping property, while when it exceeds 250 parts by weight, the kneading operability is considerably poor and the wear resistance and tensile strength are considerably lower.

If it is intended to further improve the wear resistance of the tread rubber composition used in the pneumatic tire according to the invention, 30-150 parts by weight of an oil extender may be previously added based on 100 parts by weight of the copolymer A. When the amount of the oil extender exceeds 150 parts by weight, the processability in the production of the copolymer is not obtained, while when it is less than 30 parts by weight, the effect of improving the wear resistance becomes small. As the oil extender, use may be made of aromatic oil, naphthenic oil and paraffininc oil.

The pneumatic tire according to the invention is characterized by using as a tread rubber a rubber composition containing given amounts of the copolymers A and B and carbon black. Moreover, additives usually used in rubber industry such as antioxidants, vulcanization accelerators, vulcanizing agents and the like may be properly compounded with the above rubber composition.

The following examples are given in illustration of the invention. Only examples 6, 7, 8, 9 and 10 are within the scope of the invention.

The copolymers used in the following examples and comparative examples were manufactured by the following methods and their analytical results are shown in Table 1.

### Copolymer A-I

Into an autoclave of 40 liters were charged 16 liters of cyclohexane, 2.7kg of butadiene and 1.3kg of styrene, and 200g of tetrahydrofuran was added thereto, and then the polymerization temperature was adjusted so as to obtain given bound styrene content and vinyl bond content and 48 mmol of n-butyllithium was added to conduct the polymerization. After the completion of the polymerization, the coupling was carried out with 24 mmol of dimethyl dichlorosilane and 0.5 part by weight of di-tert-butyl-p-cresol and 60 parts by weight of an aromatic oil were added per 100 parts by weight of polymer, which was subjected to steam stripping to obtain a given polymer.

### Copolymer A-II

The same procedure as for the copolymer A-I was repeated except that 48 mmol of tetramethylene-1,4-dilithium was added instead of 48 mmol of n-butyllithium.

### Copolymer A-III

The same procedure as for the copolymer A-I was repeated except that 24 mmol of tetramethylene-1,4-dilithium was added instead of 48 mmol of n-butyllithium.

### Copolymers A-IV, A-V, A-VI, A-VII

The same procedure as for the copolymer A-III was repeated except that the amounts of styrene and tetrahydrofuran added were changed.

### Copolymer A-VIII

The same procedure as for the copolymer A-III was repeated except that 25 parts by weight of an aromatic oil was added after the completion of the polymerization.

### Copolymer A-IX

The same procedure as for the copolymer A-III was repeated except that the coupling with dimethyl dichlorotin was carried out after the completion of the polymerization.

The microstructure and molecular weight of the thus obtained copolymers are shown in Table 1.

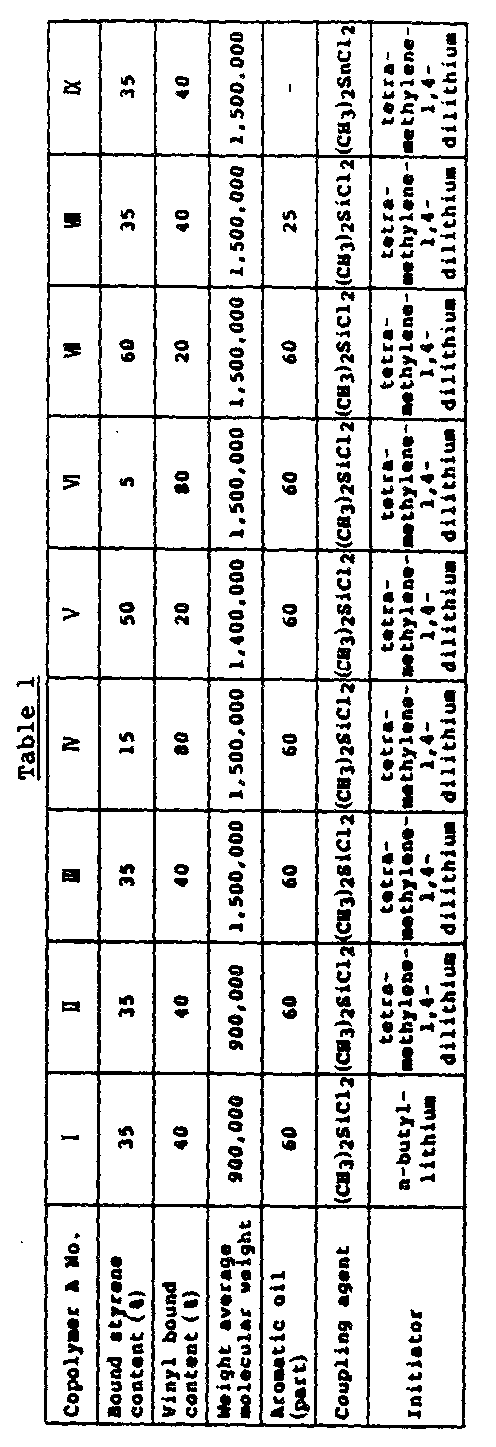

The copolymer A (A-I to A-IX) was compounded with a carbon black shown in Table 2 according to a compounding recipe (parts by weight) shown in Table 3 to obtain a rubber composition. Then, a tread of each of a front tire having a tire size of 205/515-13 and a rear tire having a tire size of 225/515-13 was manufactured by using each of the rubber compositions shown in Table 3. After these tires were mounted onto a vehicle, the running performance and worn appearance were measured by the following methods to obtain results as shown in Table 3.

### Running performance

After the vehicle was run on a circuit course of 4.41 km 20 times, the running performance was evaluated as a difference between first lap time and twentyth lap time by an index value on the basis that the control tire (using the rubber composition of Comparative Example 1) was 100. When the index value is more than 100, there is no time difference between the first lap time and twentyth lap time and the running performance is excellent, while when it is less than 100, the running performance is considerably poor.

### Appearance of worn tread

The appearance of worn tread was evaluated by a five-point system on the basis that the appearance of the control tire was 3. The larger the numerical value, the better the appearance and the best appearance is 5, while the worst appearance is 1.

Moreover, the properties of the polymer were measured by the following methods.

The microstructure of butadiene unit (vinyl bond content) was measured according to an infrared spectroscopy (Morero's method). The bound styrene content was measured from a calibration curve according to an infrared spectroscopy based on absorption of phenyl group at 699 cm⁻¹.

As regards the molecular weight, the weight average molecular weight as polystyrene was measured by GPC analysis using a combination of two GMHX columns of HLC 8020 (trade name) made by Toso Kabushiki Kaisha. The specific surface area of nitrogen adsorption (N₂SA) of carbon black was measured according to ASTM D3037.

**Table 2**

| | | |
|---|---|---|
| Carbon black No. | I | II |
| N₂SA (m²/g) | 115 | 82 |

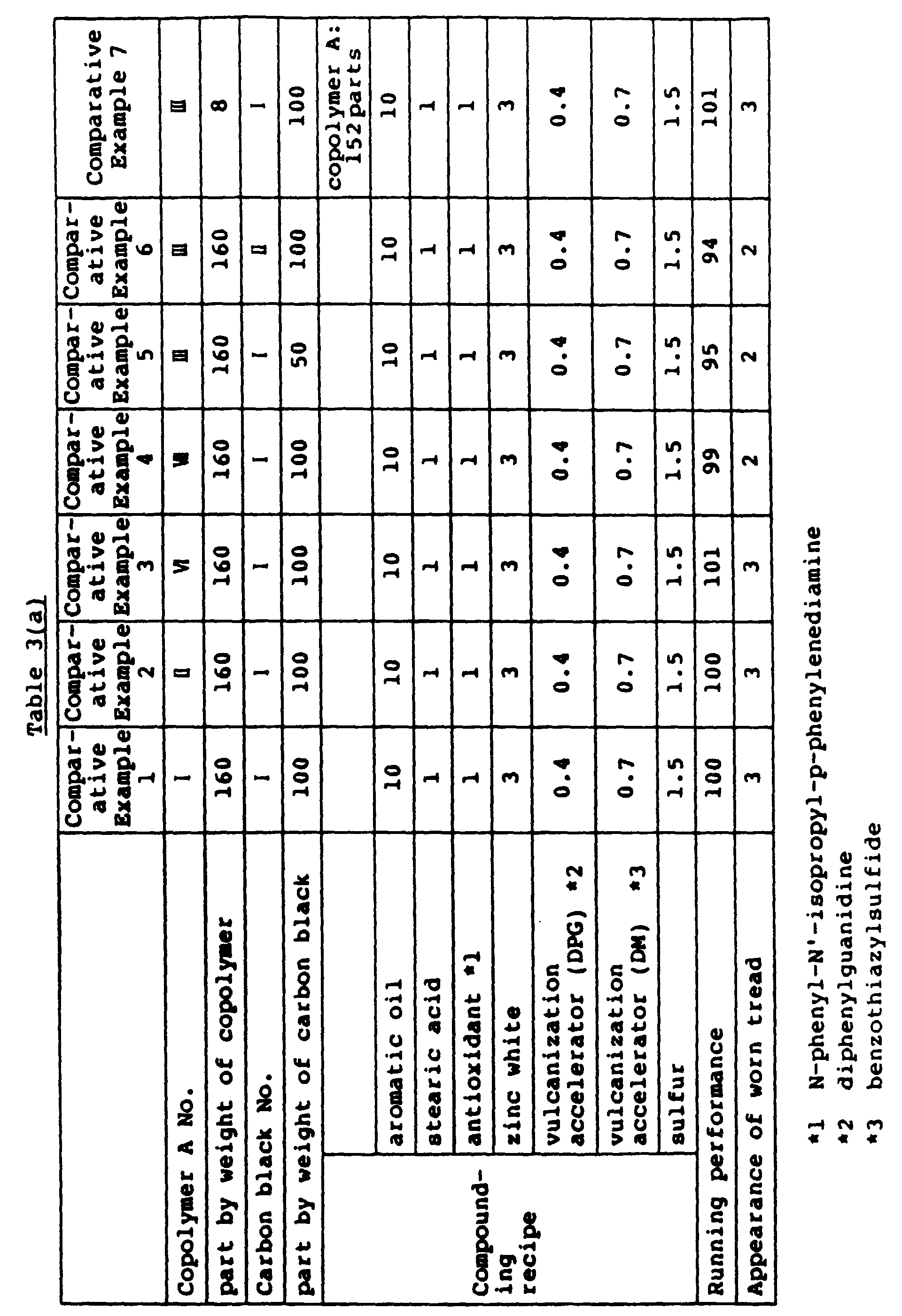

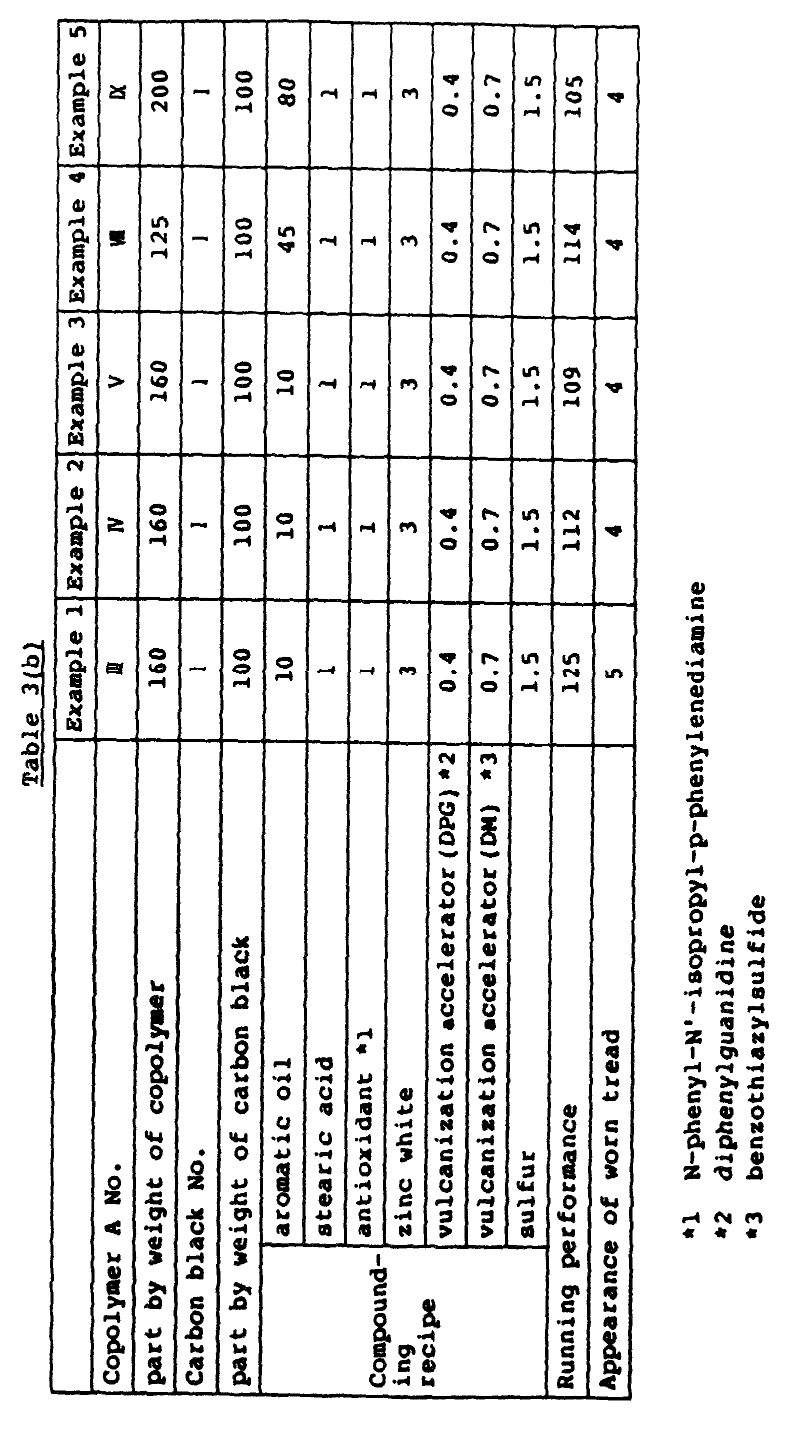

Further, the copolymers A and B used in the following examples and comparative examples were obtained by the following methods and their analytical results are shown in Tables 4 and 5, respectively.

### Production of copolymer A

### (a) Copolymer A-1

Into an autoclave of 40 liters were charged 16 liters of cyclohexane, 2.7kg of butadiene and 1.3kg of styrene, and 200g of tetrahydrofuran was added thereto, and then the polymerization temperature was adjusted so as to obtain given bound styrene content and vinyl bond content and 48 mmol of tetramethylene-1,4-dilithium was added to conduct the polymerization. After the completion of the polymerization, the coupling was carried out with 24 mmol of dimethyl dichlorosilane and 0.5 part by weight of di-tert-butyl-p-cresol was added per 100 parts by weight of polymer, which was subjected to steal stripping to obtain a given polymer.

### (b) Copolymer A-2

The same procedure as for the copolymer A-1 was repeated except that 24 mmol of tetramethylene-1,4-dilithium was added.

### (C) Copolymer A-3

The same procedure as for the copolymer A-2 was repeated except that the coupling with dimethyl dichlorotin was carried out after the completion of the polymerization.

### (d) Copolymer A-4

The same procedure as for the copolymer A-2 was repeated except that the amounts of styrene and tetrahydrofuran added were changed.

### Production of copolymer B

Various copolymers having a molecular weight and bound styrene content as shown in Table 5 were produced by polymerizing variable amounts of styrene, 1,3-butadiene and n-butyllithium in 16 liters of cyclohexane as a solvent in a reaction vessel of 40 liters capacity.

**Table 4**

| | A-1 | A-2 | A-3 | A-4 |
|---|---|---|---|---|
| Bound styrene content (%) | 35 | 35 | 35 | 15 |
| Vinyl bond content (%) | 40 | 40 | 40 | 60 |
| Weight average molecular weight | 900,000 | 1,500,000 | 1,500,000 | 1,500,000 |
| Coupling agent | (CH₃)₂SiCl₂ | (CH₃)₂SiCl₂ | (CH₃)₂SnCl₂ | (CH₃)₂SiCl₂ |

**Table 5**

| | B-1 | B-2 | B-3 | B-4 | B-5 |
|---|---|---|---|---|---|
| Bound styrene content (%) | 35 | 35 | 35 | 35 | 40 |
| Weight average molecular weight | 1,300 | 10,000 | 20,000 | 70,000 | 10,000 |

A solution of the copolymer A (A-1 to A-4) was mixed with the copolymer B (B-1 to B-5) at a mixing ratio shown in Table 6 and then desolvation and drying were carried out to obtain a copolymer mixture (C-1 to C-9). The thus obtained copolymer mixture was compounded with a carbon black shown in Table 2 according to a compounding recipe (parts by weight) shown in Table 7 to obtain a rubber composition. Then, a tread of each of a front tire having a tire size of 205/515-13 and a rear tire having a tire size of 225/515-13 was manufactured by using each of the rubber compositions shown in Table 7. After these tires were mounted onto a vehicle, the running performance and worn appearance were measured by the same methods as in Example 1 to obtain results as shown in Table 7.

**Table 6**

| | C-1 | C-2 | C-3 | C-4 | C-5 | C-6 | C-7 | C-8 | C-9 |
|---|---|---|---|---|---|---|---|---|---|
| (parts by weight) | A-1 | A-2 | A-2 | A-2 | A-2 | A-3 | A-4 | A-2 | A-2 |
| | 100 | 100 | 100 | 100 | 100 | 100 | 100 | 100 | 100 |
| (parts by weight) | B-2 | B-2 | B-3 | B-4 | B-5 | B-2 | B-2 | B-2 | B-1 |
| | 50 | 50 | 50 | 50 | 50 | 50 | 50 | 15 | 50 |

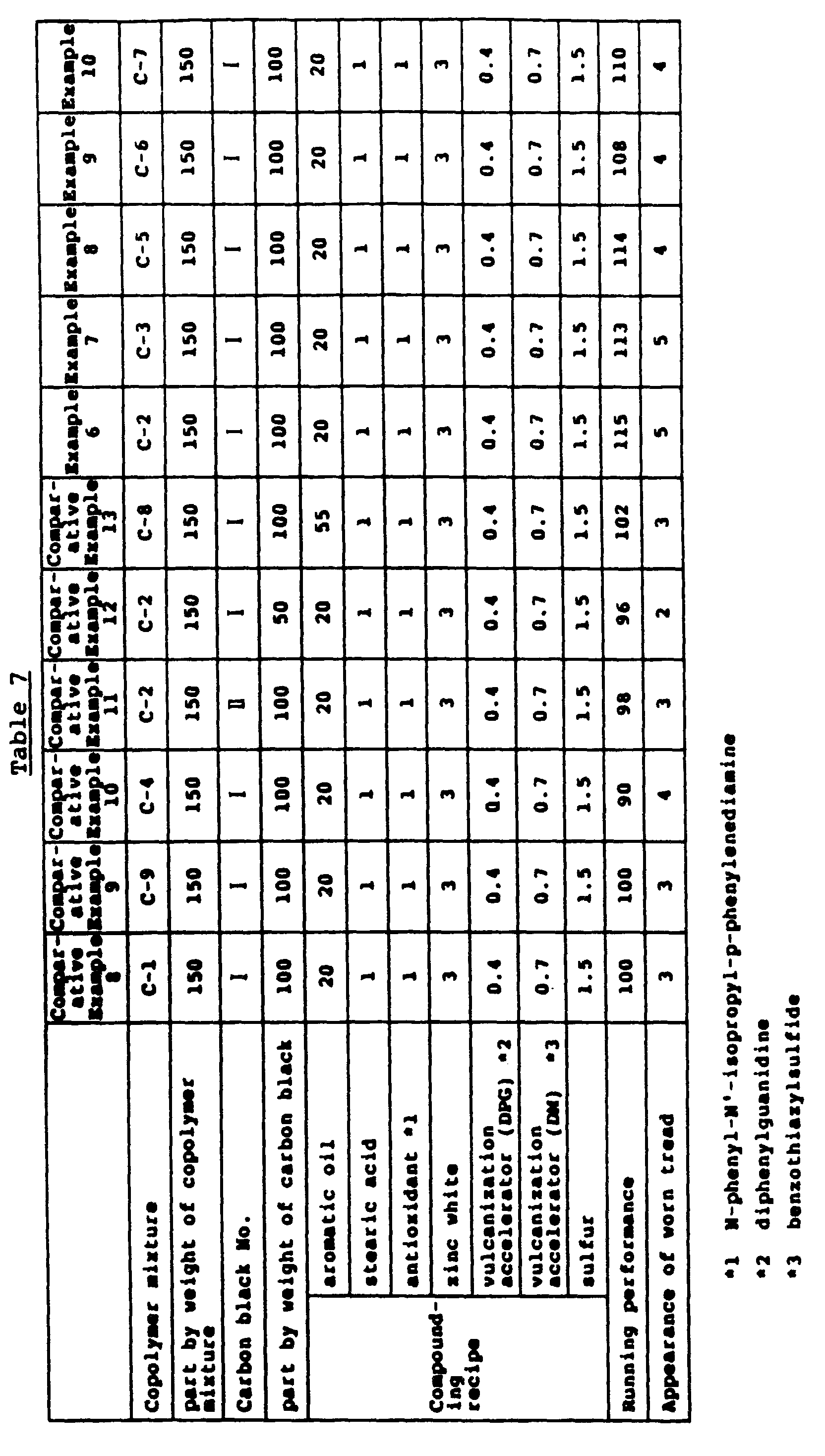

As seen from the results of Table 7, in the pneumatic tires having high running performances according to the invention, the rubber compositions containing the particular copolymer A of specified molecular weight obtained by polymerization using the particular initiator and further the particular copolymer B and carbon black having particular specific surface area of nitrogen adsorption are used as tread rubbers, so that the worn appearance is considerably improved and also the high running performances, particularly gripping performance, are stably developed at a high speed.

## Claims

1. A pneumatic tire having a tread portion made from a rubber composition comprising 60-250 parts by weight of carbon black having a specific surface area of nitrogen adsorption (N₂SA) of 90-250 m²/g based on 100 parts by weight of a styrene-butadiene copolymer, which is obtained by using an organolithium polyfunctional initiator or an organomonolithium initiator and a polyfunctional monomer and has a weight average molecular weight as polystyrene of not less than 1,000,000, alone or a rubber blend containing not less than 10 parts by weight of the said copolymer, wherein said styrene-butadiene copolymer has a content of bound styrene of 10-55% by weight and a content of vinyl bonds in butadiene units of 20-80% by weight, and wherein said styrene-butadiene copolymer further contains a low molecular weight styrene-butadiene copolymer obtained by using an organolithium initiator and having a weight average molecular weight as polystyrene of 2,000-50,000, in an amount of 20-120 parts by weight per 100 parts by weight of the first-mentioned copolymer.

2. A pneumatic tire as claimed in claim 1, characterized in that said content of bound styrene is 25-45% by weight and said content of vinyl bonds in butadiene units is 35-70% by weight.

3. A pneumatic tire as claimed in claim 1 or 2, characterized in that said weight average molecular weight as polystyrene is 1,200,000-5,000,000.

4. A pneumatic tire as claimed in any of claims 1 to 3, characterized in that said organolithium polyfunctional initiator is selected from tetramethylene-1,4-dilithium, hexamethylene-1,6-dilithium, 1,3-dilithiobenzene, 1, 1,4-dilithiobenzene, octamethylene-1,8-dilithium 8-dilithium and 1,4-dilithiocyclohexane.

5. A pneumatic tire as claimed in any of claims 1 to 3, characterized in that said organomonolithium initiator is n-butyllithium or sec-butyllithium.

6. A pneumatic tire as claimed in any of claims 1 to 5, characterized in that said styrene-butadiene copolymer contains a low molecular weight styrene-butadiene copolymer obtained by using an organolithium initiator and having a weight average molecular weight as polystyrene of 5,000-30,000.

7. A pneumatic tire as claimed in any of claims 1 to 6, characterized in that said styrene-butadiene copolymer is coupled at its polymer anion with a silane compound having the following general formula:
SiRₚX_{q}
wherein X is a halogen atom selected from chlorine, bromine and iodine, R is a substituent selected from alkyl groups, alkenyl groups, cycloalkyl groups and aryl groups, p is an integer of 0-2, q is an integer of 2-4, and p+q = 4.

8. A pneumatic tire as claimed in claim 7, characterized in that said silane compound is selected from tetrachlorosilane, tetrabromosilane, methyl trichlorosilane, butyl trichlorosilane, octyl trichlorosilane, dimethyl dichlorosilane, dimethyl dibromosilane, diethyl dichlorosilane, dibutyl dichlorosilane, dibutyl dibromosilane, dioctyl dichlorosilane, diphenyl dichlorosilane, diallyl dichlorosilane, phenyl trichlorosilane and phenyl tribromosilane.

## Patentansprüche

1. Luftreifen mit einem Laufflächenanteil, der aus einer Kautschukzusammensetzung hergestellt wird, umfassend 60-250 Gewichtsteile Ruß mit einer spezifischen Oberfläche der Stickstoffadsorption (N₂SA) von 90-250 m²/g auf der Grundlage von 100 Gewichtsteilen eines Styrol-Butadien-Copolymers, das durch Verwendung eines polyfunktionellen Organolithiuminitiators oder eines Organomonolithiuminitiators und eines polyfunktionellen Monomers erhalten wird und das ein gewichtsmittleres Molekulargewicht als Polystyrol von nicht weniger als 1 000 000 aufweist, allein oder eines Kautschukgemischs, das nicht weniger als 10 Gewichtsteile des Copolymers enthält, wobei das Styrol-Butadien-Copolymer einen Gehalt an gebundenem Styrol von 10-55 Gew.-% und einen Gehalt an Vinylbindungen in Butadieneinheiten von 20-80 Gew.-% aufweist und wobei das Styrol-Butadien-Copolymer weiterhin in einer Menge von 20-120 Gewichtsteilen pro 100 Gewichtsteile des ersterwähnten Copolymers ein Styrol -Butadien-Copolymer mit niedrigem Molekulargewicht enthält, das durch Verwendung eines Organolithiuminitiators erhalten wird und ein gewichtsmittleres Molekulargewicht als Polystyrol von 2 000-50 000 aufweist.

2. Luftreifen nach Anspruch 1, dadurch gekennzeichnet, daß der Gehalt an gebundenem Styrol 25-45 Gew.-% beträgt und der Gehalt an Vinylbindungen in Butadieneinheiten 35-70 Gew.-% beträgt.

3. Luftreifen nach Anspruch 1 oder 2, dadurch gekennzeichnet, daß das gewichtsmittlere Molekulargewicht als Polystyrol 1 200 000-5 000 000 beträgt.

4. Luftreifen nach einem der Ansprüche 1 bis 3, dadurch gekennzeichnet, daß der polyfunktionelle Organolithiuminitiator aus Tetramethylen-1,4-dilithium, Hexamethylen-1,6-dilithium, 1,3-Dilithiobenzol, 1,4-Dilithiobenzol, Octamethylen-1,8-dilithium und 1,4-Dilithiocyclohexan ausgewählt wird.

5. Luftreifen nach einem der Ansprüche 1 bis 3, dadurch gekennzeichnet, daß der Organononolithiuminitiator n-Butyllithium oder sec-Butyllithium ist.

6. Luftreifen nach einem der Ansprüche 1 bis 5, dadurch gekennzeichnet, daß das Styrol-Butadien-Copolymer ein Styrol-Butadien-Copolymer mit niedrigem Molekulargewicht enthält, das unter Verwendung eines Organolithiuminitiators erhalten wird und ein gewichtsmittleres Molekulargewicht als Polystyrol von 5 000-30 000 aufweist.

7. Luftreifen nach einem der Ansprüche 1 bis 6, dadurch gekennzeichnet, daß das Styrol-Butadien-Copolymer an seinem polymeren Anion mit einer Silanverbindung gekoppelt ist, die die folgende allgemeine Formel:
SiRₚX_{q}
hat, in der X ein Halogenatom ist, ausgewählt aus Chlor, Brom und Jod, R ein Substituent ist, ausgewählt aus Alkylgruppen, Alkenylgruppen, Cycloalkylgruppen und Arylgruppen, p eine ganze Zahl von 0-2 ist, q eine ganze Zahl von 2-4 ist und p+q=4 ist.

8. Luftreifen nach Anspruch 7, dadurch gekennzeichnet, daß die Silanverbindung aus Tetrachlorsilan, Tetrabromsilan, Methyltrichlorsilan, Butyltrichlorsilan, Octyltrichlorsilan, Dimethyldichlorsilan, Dimethyldibromsilan, Diethyldichlorsilan, Dibutyldichlorsilan, Dibutyldibromsilan, Dioctyldichlorsilan, Diphenyldichlorsilan, Diallyldichlorsilan, Phenyltrichlorsilan und Phenyltribromsilan ausgewählt wird.

## Revendications

1. Bandage pneumatique comportant une partie de bande de roulement construite à partir d'une composition à base de caoutchouc comprenant 60-250 parties en poids de noir de carbone ayant une surface spécifique d'adsorption d'azote (N₂SA) de 90-250 m²/g sur la base de 100 parties en poids d'un copolymère styrène-butadiène, obtenu par l'utilisation d'un initiateur organolithien polyfonctionnel ou d'un initiateur organolithien et d'un monomère polyfonctionnel et ayant un poids moléculaire moyen pondéral sur la base du polystyrène n'étant pas inférieur à 1.000.000 seul, ou un mélange à base de caoutchouc ne contenant pas moins de 10 parties en poids dudit copolymère, dans lequel ledit copolymère styrène-butadiène a une teneur en styrène lié de 10-55% en poids et une teneur en liaisons vinyle dans les unités butadiène de 20-80% en poids, et dans lequel ledit copolymère styrène-butadiène contient en outre un copolymère styrène-butadiène de faible poids moléculaire obtenu par l'utilisation d'un initiateur organolithien et ayant un poids moléculaire moyen pondéral sur la base du polystyrène de 2.000-50.000, dans des quantités de 20-120 parties en poids pour 100 parties en poids du copolymère cité en premier lieu.

2. Bandage pneumatique selon la revendication 1, caractérisé en ce que ladite teneur en styrène lié est de 25-45% en poids et ladite teneur en liaisons vinyle dans les unités butadiène est de 35-70% en poids.

3. Bandage pneumatique selon la revendication 1 ou 2, caractérisé en ce que ledit poids moléculaire moyen pondéral sur la base du polystyrène est de 1.200.000-5.000.000.

4. Bandage pneumatique selon l'une quelconque des revendications 1 à 3, caractérisé en ce que ledit initiateur organolithien polyfonctionnel est choisi parmi le tétraméthylène-1,4-dilithium, l'hexaméthylène-1,6-dilithium, le 1,3-dilithiobenzène, le 1,4-dilithiobenzène, l'octaméthylène-1,8-dilithium et le 1,4-dilithiocyclohexane.

5. Bandage pneumatique selon l'une quelconque des revendications 1 à 3, caractérisé en ce que ledit initiateur organolithien est le n-butyllithium ou le sec-butyllithium.

6. Bandage pneumatique selon l'une quelconque des revendications 1 à 5, caractérisé en ce que ledit copolymère styrène-butadiène contient un copolymère styrène-butadiène de faible poids moléculaire obtenu par l'utilisation d'un initiateur organolithien et ayant un poids moléculaire moyen pondéral sur la base du polystyrène de 5.000-30.000.

7. Bandage pneumatique selon l'une quelconque des revendications 1 à 6, caractérisé en ce que ledit copolymère styrène-butadiène est couplé au niveau de son anion polymère avec un composé silane ayant la formule générale:
SiRₚX_{q}
dans laquelle X est un atome d'halogène choisi parmi le chlore, le brome et l'iode, R est un substituant choisi parmi les groupes alkyle, les groupes alkényle, les groupes cycloalkyle et les groupes aryle, p est un nombre entier valant 0-2, q est un nombre entier valant 2-4, et p+q=4.

8. Bandage pneumatique selon la revendication 7, caractérisé en ce que ledit composé silane est choisi parmi le tétrachlorosilane, le tétrabromosilane, le méthyl-trichlorosilane, le butyl-dichlorosilane. l'octyl-trichlorosilane, le diméthyl-dichlorosilane, le diméthyldibromosilane, le diéthyl-dichlorosilane, le dibutyl-dichlorosilane, le dibutyl-dibromosilane, le dioctyl-dichlorosilane, le diphényldichlorosilane, le diallyl-dichlorosilane, le phényl-trichlorosilane et le phényl-tribromosilane,
